(19) **Europäisches Patentamt**
**European Patent Office**
**Office européen des brevets**

(11) **EP 1 852 765 B1**

(12) **EUROPEAN PATENT SPECIFICATION**

(45) Date of publication and mention
of the grant of the patent:
**15.08.2012 Bulletin 2012/33**

(51) Int Cl.:
***G05D 23/19*** (2006.01)

(21) Application number: **04822565.0**

(22) Date of filing: **08.12.2004**

(86) International application number:
**PCT/JP2004/018297**

(87) International publication number:
**WO 2006/061892 (15.06.2006 Gazette 2006/24)**

(54) **TEMPERATURE CONTROL METHOD AND TEMPERATURE CONTROLLER**

TEMPERATURREGELVERFAHREN UND TEMPERATURREGLER

METHODE DE COMMANDE DE TEMPERATURE ET CONTROLEUR DE TEMPERATURE

(84) Designated Contracting States:
**DE GB**

(43) Date of publication of application:
**07.11.2007 Bulletin 2007/45**

(73) Proprietor: **Incorporated National University
Iwate University
Morioka-shi, Iwate 020-8550 (JP)**

(72) Inventors:
• **ITO, Kikukatsu,
Iwate University
Morioka-shi, Iwate 0208550 (JP)**
• **ITO, Takanori,
Iwate University
Morioka-shi, Iwate 0208550 (JP)**
• **OSADA, Hiroshi,
Iwate University
Morioka-shi, Iwate 0208550 (JP)**
• **CHIBA, Shigeki,
Iwate University
Morioka-shi, Iwate 0208550 (JP)**

(74) Representative: **Henkel, Breuer & Partner
Patentanwälte
Maximiliansplatz 21
80333 München (DE)**

(56) References cited:
**EP-A2- 0 132 345     JP-A- 2004 110 405
JP-A- 2004 174 036     JP-A- 2004 174 036
JP-A- 2004 242 643     US-A1- 2003 005 707**

• **Anonymous: "Creation Matters", , 30 September
2004 (2004-09-30), pages 1-10, XP002624193,
Retrieved from the Internet: URL:http:
//www.creationresearch.org/creati on_
matters/pdf/2004/CM09%2005%20low.PDF
[retrieved on 2011-02-21]**
• **Anonymous: "Dynamics Days 2004, 23rd
International Conference on Nonlinear Dynamics
and Complex Systems, January 2-5, 2004,
Abstracts", , 2 January 2004 (2004-01-02), pages
1-32, XP002624194, Retrieved from the Internet:
URL:http://cncs.pratt.duke.edu/DDays2004/a
bstracts.pdf [retrieved on 2011-02-21]**

**Description**

TECHNICAL FIELD

The present invention relates to a method for temperature control, and a temperature controller.

RELATED ART

As an automatic control method, which controls an amount of operation provided for a controller to follow in target range value in a condition various state variables such as temperature, pressure, flow, and level of controlled object change in time, PID (proportional, integral, differential) control method is known. This PID control is especially used extensively in temperature control (constant temperature control) field.

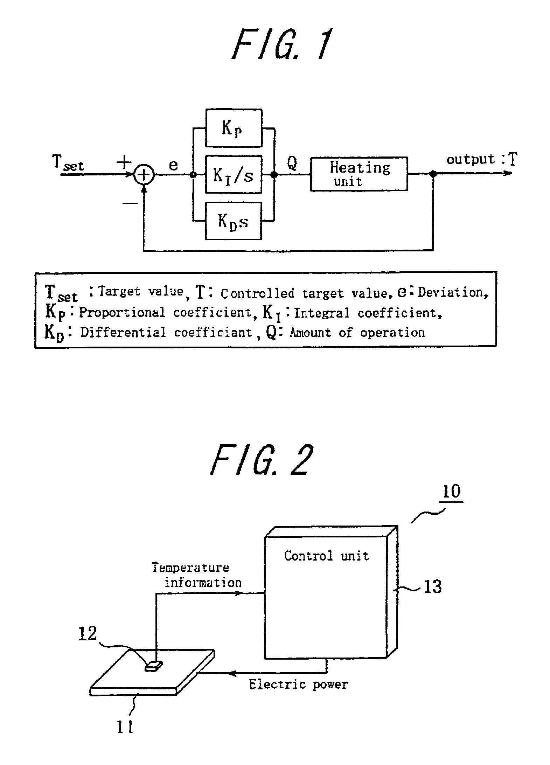

Fig. 1 is a flow chart illustrating an embodiment of a usual temperature control algorithm based on PID control. As is apparent from Fig. 1, in the temperature control using PID control, enough high-speed response could not be realized, because an amount of operation is always determined by a deviation between a target value (target temperature) and a present value (present temperature) processed operation by each coefficient of proportional, integral, differential element, and therefore the amount of operation of every time is large, and comes to need long time at operation speed.

Besides, each control coefficient of proportional, integral, differential elements ($K_P$, $K_I$, $K_D$) are introduced by mathematical techniques, and basically not directly connected to physics characteristic of a temperature-controlled object, therefore it is virtually impossible to theoretically seek most suitable value of aforementioned each control coefficient, and therefore, aforementioned each control coefficient is determined by experiential perception or trial and error. From such a point of view, an accurate and high-speed response thereof could not be realized.

Furthermore, as is apparent from Fig. 1, the PID control requires an integral element to reach to a target value (target temperature), therefore it cannot avoid the fact that the pulsation occurs, and this also kept impossible to realize sufficiently accurate and high-speed response.

Taking the above-described problems into consideration, various improvements are attempted for PID control. For example, a method for setting a set value is disclosed in Japanese Patent Application Laid-Open No. 2001-92501, in which the amount of control of a controlled object may accurately follow the target value of the controlled object during automatic control for following the target value that changes in time. Using such control method, it has advantages in that it makes follow to a set value precisely according to a characteristic of system of the controlled object, and a servo-control may be implemented.

Moreover, a PID control technique is disclosed in Japanese Patent Application Laid-Open No. 2001-163101, in which the PID control technique is characterized in containing the steps of: calculating a deviation between a present value which is detected from a controlled object device and a set value which is a target value; operating PID control in response to the deviation calculating step, and then determining whether a present amount of operation of a controlled object device is in a predetermined range or not; outputting a control operation signal to the controlled object device with a PID control operation value multiplied by an output ratio, which is predetermined in response to the amount of operation within the predetermined range, if the present amount of operation is in the predetermined range and a sign of the deviation becomes inverse; and outputting a control operation signal to the controlled object device with a PID control operation value multiplied by an output ratio which is predetermined in response to the amount of operation corresponding to out of the predetermined range, if the present amount of operation is out of the predetermined range.

Patent document 1: Japanese Patent Application Laid-Open No. 2001-92501
Patent document 2: Japanese Patent Application Laid-Open No. 2000-163101

However, even using above-described PID controls, the temperature control with an accurate and high-speed response has not been achieved.

"Creation Matters", 30 September 2004 (2004-09-30), pages 1-10, XP002624193, Retrieved from the Internet: URL:http://www.creationresearch.org/creation matters/pdf/2004/C M09%2005%20low.PDF discloses a method according to the pre-characterizing part of claim 1 and the device according to the pre-characterizing part of claim 7.

DISCLOSURE OF THE INVENTION

PROBLEMS TO BE SOLVED BY THE INVENTION

An object of the present invention is to provide a new temperature control algorithm with an accurate and high-speed response, and to execute temperature control of a predetermined object at accurate and high speed by using this temperature control algorithm.

## MEANS FOR SOLVING THE PROBLEM

According to the present invention the above object is achieved by the combination of features of claims 1 or 7. The dependent claims are directed to different advantageous aspects of the invention.

The present invention is defined by claims 1 and 7. [0013] The present inventors zealously executed the discussion to achieve the above-described purpose, and executed the search for the temperature control algorithm having an accurate and high-speed response to replace the conventional PID control. As the searched result, the present inventors have paid attention to the constant temperature characteristic of the living organisms that existed in the natural world, and using constant characteristics of the homeothermic plant was assumed based on grounds that it is especially easy to collect the homeothermic plant that has enough constant characteristics in the extremely low temperature. Actually, a plant that is referred to as skunk cabbage (Symplocarpus foetidus) that grows naturally in the cold district in Iwate Prefecture etc. in Japan can maintain the temperature to about 20 degrees Celsius even if it has a change of the outside temperature below the freezing point.

Thus, the present inventors found that aforementioned homeothermic plant has a temperature control algorithm with a superior high-speed and precise response by analyzing a temperature control mechanism of such a plant. The present inventors attempted to control a temperature of an object by utilizing this temperature control algorithm.

In an aspect of the present invention, aforementioned temperature control includes: a first temperature control process for providing the amount of operation with a fixed value until the temperature of the object reaches the temperature of the target; and a second temperature control process for determining the amount of operation so that the amount of change of the temperature of the object, per each control cycle, may become zero after reaching the temperature of the target by the temperature of the object.

Besides, in the present invention, aforementioned temperature control algorithm follows an equation below;

$$\frac{d^2Q}{dt^2} = C_1 \frac{dQ}{dt} + C_2 Q + C_3 (T_A - T_S) \qquad (1)$$

(Q; Calorific value from a predetermined heating means, $T_S$; Temperature of a heating means, $T_A$; Outside temperature, $C_1$-$C_3$; Coefficients concerning the temperature characteristic of a target object).

## EFFECT OF THE INVENTION

As described above, a new temperature control algorithm with an accurate and high-speed response may be provided in accordance with the present invention. Thereby, the temperature control of the predetermined object may be implemented at accurate and high speed.

## BRIEF DESCRIPTION OF THE DRAWINGS

Fig. 1 is a flow chart showing a conventional PID control algorithm;
Fig. 2 is a block diagram showing an embodiment of a temperature controller in accordance with present invention;
Fig. 3 is a flow chart showing an embodiment of an algorithm in a method for temperature control in accordance with present invention;
Fig. 4 is a graph showing an embodiment of a constant temperature control based on a method for temperature control and a temperature controller in accordance with the present invention; and
Fig. 5 is a graph showing an embodiment of a raising temperature control based on a method for temperature controlling and a temperature controller in accordance with the present invention.

## BEST MODE FOR CARRYING OUT THE INVENTION

Hereafter, details, other features, and the advantageous effects of the present invention are described in detail on the basis of the best mode.

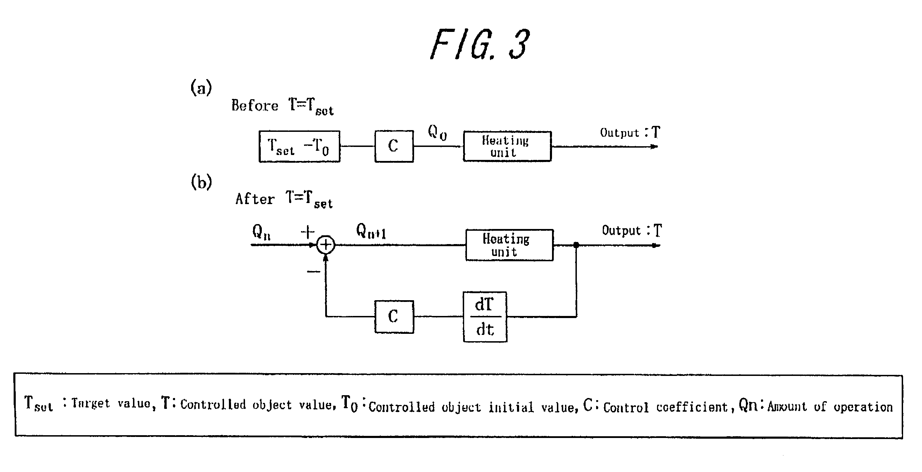

Fig. 2 is a block diagram showing an embodiment of a temperature controller in accordance with present invention, and Fig. 3 is a flow chart showing an embodiment of an algorithm in a control unit of a temperature controller of Fig. 2.

In a temperature controller 10 shown in Fig. 2, an object 12 in which the temperature control is applied is put on a heating means 11 composed of a Peltier device etc. Furthermore, a control unit 13 is provided for a temperature controller 10. The control unit 13 sequentially monitors temperature information from the object 12 and supplies a predetermined electric power to the heating means 11 based on a temperature control algorithm shown in Fig. 3 to control the temperature of the object 12.

The temperature control algorithm shown in Fig. 3 is based on a constant temperature control mechanism of a homeothermic plant in accordance with the present invention, and comprises a first temperature control process shown in Fig. 3(a) and a second temperature control process shown in Fig. 3(b). In the first temperature control process, an amount of operation is provided with a fixed value until a temperature of the object 11 reaches a temperature of a target. In the second temperature control process, the amount of operation is decided so that the amount of the change of the temperature of the object, per each control cycle, may become zero after reaching the temperature of the target by the temperature of the object 11.

In the temperature control algorithm shown in Fig. 3, the amount of operation till temperature of the object 11 reached in the temperature of the target in the first temperature control process and the amount of operation to maintain the temperature of the target in the second temperature control process may be independently operated respectively, so that time to need for operation may be made for a short time. Thus, an enough and high-speed response may be realized in the temperature control of the object 11.

Besides, because control coefficient in Fig. 3 is extracted from an actual homeothermic plant, it is easy to derive the control coefficient theoretically. Therefore, the precise and high-speed response may be realized, and it enables to implement short time reach to the temperature of the target as well as an accurate and steady maintenance of the temperature of the object 11.

Moreover, as algorithm shown in Fig. 3 doesn't have integral element, the conventional pulsation is not produced. Thus, it is possible to implement short time reach to the temperature of the target as well as an accurate and steady maintenance of the temperature of the object 11.

In case with the use of a device as shown in Fig. 2, the algorithm control in the control unit 13 follows an equation below;

$$\frac{d^2Q}{dt^2} = C_1 \frac{dQ}{dt} + C_2 Q + C_3 (T_A - T_S) \qquad (1)$$

($Q$; Calorific value from a predetermined heating means, $T_S$; Temperature of the heating means, $T_A$; Outside temperature, $C_1$-$C_3$; Coefficients concerning the temperature characteristic of a target object).

The above-described equation (1) is provided by the present inventors because of an analysis of a temperature control mechanism based on the constant temperature control of various kinds of homeothermic plants such as skunk cabbage.

In addition, a second term ($C_2 Q$) and a third term ($C_3 (T_A - T_S)$) in the equation (1) is depend on operating the fixed values based on the first temperature process and a first term ($C_1 \cdot dQ/dt$) is depend on operating so that the amount of change based on the second temperature control process becomes zero.

Owing to temperature control algorithm shown in Fig. 3 and the equation (1), it is possible to control the temperature of the object 11, especially constant temperature precisely and at high-speed. For example, in case of constant temperature control, a temperature control may be done with a controlling error of -0.5 degrees Celsius to +0.5 degrees Celsius of the target temperature. In addition, in a rising temperature control and a falling temperature control, overshoot and undershoot hardly occurs.

A kind of homeothermic plants used in the present invention is superior to the constant temperature characteristics and preferably if algorithm shown to in an equation (1) can be extracted, nothing is limited in particular. However, skunk cabbage is preferably used.

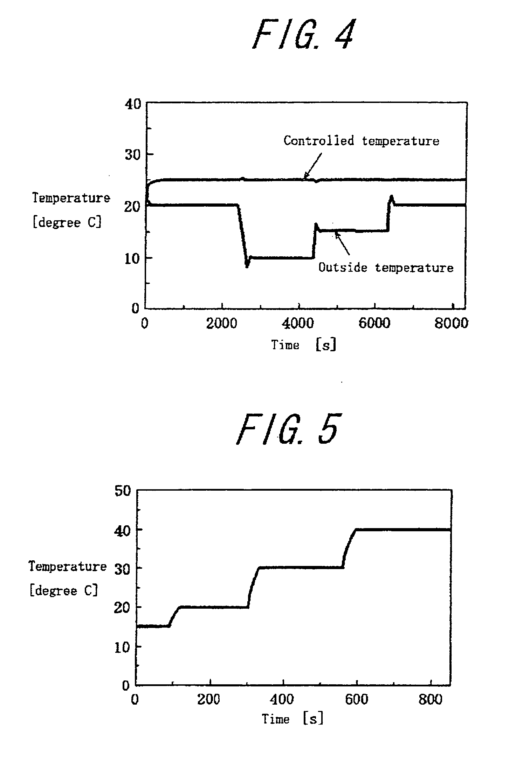

Fig. 4 shows a temperature change of the object 11 for outside temperature change, in case of using the temperature controller 10 shown in Fig. 2. Temperature control shown in Fig. 4 is conducted based on the algorithm shown in the equation (1) extracted by skunk cabbage. As is apparent from the Fig. 4, although outside temperature changes with about 10 degrees Celsius in a predetermined time interval, it is understood that temperature of an object 11 is almost maintained the same.

Fig. 5 shows a rising temperature process, in case of using the temperature controller 10 shown in Fig. 2. Temperature control shown in Fig. 4 is also conducted based on the algorithm shown in the equation (1) extracted by skunk cabbage. As is apparent from the Fig. 5, even in the rising temperature operation for dozens of degrees, it is understood that either overshoot or undershoot is not observed, and it is understood that the rising temperature control is performed with an extremely accurate and high-speed response.

While the present invention has been described in detail and illustrated with reference to specific exemplary embodiments together with some example, but the present invention is not limited thereto, it should be understood that many modifications and substitutions could be made without departing from the invention.

**Claims**

1.  A method for temperature control, the method comprising the steps of:

    preparing a temperature control algorithm based on the control mechanism of a homeothermic plant; and
    controlling a temperature of a predetermined object by feedback control that uses the temperature control algorithm;

    **characterized in that** is
    the temperature control algorithm is represented by the equation below;

    $$\frac{d^2Q}{dt^2} = C_1\frac{dQ}{dt} + C_2Q + C_3(T_A - T_S) \qquad (1)$$

    whereby:

    Q; Calorific value of a predetermined heating means, $T_S$; Temperature of the heating means, $T_A$; Outside temperature, $C_1$-$C_3$; Temperature characteristic coefficients.

2.  The method according to the claim 1, **characterized in that** the temperature controlling step includes:

    a first temperature controlling step for providing the amount of operation with a fixed value until the temperature of the object reaches the temperature of the target; and
    a second temperature controlling step for determining the amount of operation so that the amount of change of the temperature of the object, per each control cycle, may become zero after reaching the temperature of the target by the temperature of the object.

3.  The method according to any of the claims 1-2, **characterized in that** the homeothermic plant is skunk cabbage.

4.  The method according to any of the claims 1-3, **characterized in that** the object is controlled at a constant temperature.

5.  The method according to claim 4, **characterized in that** the constant temperature control is done with a controlling error of -0.5 degrees Celsius to +0.5 degrees Celsius.

6.  The method according to any of claims 1-5, **characterized in that** the object is controlled by a raising temperature control or a falling temperature control without causing overshoot or undershoot.

7.  A temperature controller comprising:

    a heating means (11) for heating a predetermined object (12); and
    a temperature controlling means (10) for controlling a temperature of the predetermined object (12) by feedback control of the heating means (11) on the basis of a temperature control algorithm based on the control mechanism of a homeothermic plant,

    **characterised in that** the temperature control algorithm is represented by the equation below;

$$\frac{d^2Q}{dt^2} = C_1 \frac{dQ}{dt} + C_2 Q + C_3 (T_A - T_S) \qquad (1)$$

whereby:

Q; Calorific value of the heating means, $T_s$ ; Temperature of the heating means, $T_A$ ; Outside temperature, $C_i$ - $C_3$ ; Temperature characteristic coefficients.

8. The temperature controller according to claim 7, **characterized in that** the temperature control includes:

a first temperature control process for providing an amount of operation with a fixed value until a temperature of the object (12) reaches a temperature of a target; and
a second temperature control process for determining the amount of operation so that the amount of the change of the temperature of the object (12), per each control cycle, becomes zero after reaching the temperature of the target by the temperature of the object (12).

9. The temperature controller according to any of claims 7-8, **characterized in that** the homeothermic plant is skunk cabbage.

10. The temperature controller according to any of claims 7-9, **characterized in that** the object (12) is controlled by at a constant temperature.

11. The temperature controller according to claim 10, **characterized in that** the constant temperature control is done with a controlling error of -0.5 degrees Celsius to +0.5 degrees Celsius.

12. The temperature controller according to any of claims 7-11, **characterized in that** the object is controlled by a raising temperature control or a falling temperature control without causing overshoot or undershoot.

**Patentansprüche**

1. Verfahren zur Temperatursteuerung, wobei das Verfahren die Schritte umfasst:

Vorbereiten eines Temperatursteuerungsalgorithmuses beruhend auf dem Steuermechanismus einer Hausheiz-Anlage; und
Steuern einer Temperatur eines vorgegebenen Objekts durch Regelung unter Verwendung des Temperatursteueralgorithmuses;

**dadurch gekennzeichnet, dass**
der Temperatursteueralgorithmus dargestellt ist durch die folgende Gleichung

$$\frac{d^2Q}{dt^2} = C_1 \frac{dQ}{dt} + C_2 Q + C_3 (T_A - T_S) \qquad (1)$$

wobei:

Q: der Brennwert eines vorgegebenen Heizmittels, $T_s$: die Temperatur des Heizmittels, $T_A$: die Außentemperatur, $C_1$-$C_3$: Temperaturcharakteristikkoeffizienten sind.

**2.** Verfahren nach Anspruch 1, **dadurch gekennzeichnet, dass** der Temperatursteuerschritt umfasst:

einen ersten Temperatursteuerschritt zum Bereitstellen des Betriebsausmaßen mit einem festen Wert, bis die Temperatur des Objekts die Temperatur des Zieles erreicht; und
einen zweiten Temperatursteuerschritt zum Bestimmen der Betriebsausmaßes, so dass die Menge der Änderung der Temperatur des Objekts pro Steuerzyklus Null wird, nachdem die Temperatur des Objekts die Zieltemperatur erreicht hat.

**3.** Verfahren nach einem der Ansprüche 1 bis 2, **dadurch gekennzeichnet, dass** die Hausheiz-Anlange auf Steinkohle basiert.

**4.** Verfahren nach einem der Ansprüche 1 bis 3, **dadurch gekennzeichnet, dass** das Objekt auf eine konstante Temperatur gesteuert wird.

**5.** Verfahren nach Anspruch 4, **dadurch gekennzeichnet, dass** die Konstant-Temperatursteuerung mit einem Steuerfehler von - 0,5°C bis +0,5°C erfolgt.

**6.** Verfahren nach einem der Ansprüche 1 bis 5, **dadurch gekennzeichnet, dass** das Objekt durch eine Temperaturerhöhungssteuerung oder eine Temperaturabsenkungssteuerung gesteuert wird, ohne Überschuss oder Unterschuss zu verursachen.

**7.** Temperatursteuerung mit:

einem Heizmittel (11) zum Heizen eines vorgegebenen Objekts (12); und
einem Temperatursteuermittel (10) zum Steuern einer Temperatur des vorgegebenen Objekts (12) durch Regelung des Heizmittels (11) auf der Basis eines Temperatursteueralgorithmuses basierend auf dem Steuermechanismus einer Hausheiz-Anlage;

**dadurch gekennzeichnet, dass** der Temperatursteueralgorithmus durch die folgende Gleichung dargestellt ist:

$$\frac{d^2 Q}{dt^2} = C_1 \frac{dQ}{dt} + C_2 Q + C_3 (T_A - T_S) \qquad (1)$$

wobei:

Q: der Brennwert des Heizmittels, $T_s$: die Temperatur des Heizmittels, $T_A$: die Außentemperatur, $C_1$-$C_3$: Temperaturcharakteristikkoeffizienten sind.

**8.** Temperatursteuerung nach Anspruch 7, **dadurch gekennzeichnet, dass** die Temperatursteuerung enthält:

einen ersten Temperatursteuerungsprozess zum Bereitstellen eines Betriebsausmaßes mit einem festen Wert, bis eine Temperatur des Objekts eine Temperatur eines Ziels erreicht; und
einen zweiten Temperatursteuerprozess zum Bestimmen des Betriebsausmaßes, so dass die Menge der Änderung der Temperatur des Objekts (12) für jeden Steuerzyklus Null wird, nachdem die Temperatur des Objekts (12) die Temperatur des Ziels erreicht hat.

**9.** Temperatursteuerung nach einem der Ansprüche 7 bis 8, **dadurch gekennzeichnet, dass** die Hausheiz-Anlage auf Steinkohle basiert.

**10.** Temperatursteuerung nach einem der Ansprüche 7 bis 9, **dadurch gekennzeichnet, dass** das Objekt (12) auf eine konstante Temperatur gesteuert wird.

**11.** Temperatursteuerung nach Anspruch 7, **dadurch gekennzeichnet, dass** die Konstant-Temperatursteuerung durchgeführt wird, indem der Steuerfehler -0,5°C bis +0,5°C beträgt.

**12.** Temperatursteuerung nach einem der Ansprüche 7 bis 11, **dadurch gekennzeichnet, dass** das Objekt durch eine Temperaturerhöhungssteuerung oder eine Temperaturabsenkungssteuerung gesteuert wird, ohne einen Überschuss oder Unterschuss zu verursachen.

**Revendications**

1. Procédé de régulation de température, le procédé comprenant les étapes de :

> préparation d'un algorithme de régulation de température sur la base du mécanisme de régulation d'une plante homéotherme, et
> régulation d'une température d'un objet prédéterminé par commande à rétroaction qui utilise l'algorithme de régulation de température,

**caractérisé en ce que** l'algorithme de régulation de température est représenté par l'équation ci-dessous :

$$\frac{d^2Q}{dt^2} = C_1\frac{dQ}{dt} + C_2Q + C_3(T_A - T_S) \qquad (1)$$

dans laquelle :

> $Q$ : valeur calorifique de moyens de chauffage prédéterminés, $T_s$ : température des moyens de chauffage, $T_A$ : température extérieure, $C_1$-$C_3$ : coefficients de caractéristiques de température.

2. Procédé selon la revendication 1, **caractérisé en ce que** l'étape de régulation de température inclut :

> une première étape de régulation de température pour fournir la quantité d'opération avec une valeur fixe jusqu'à ce que la température de l'objet atteigne la température de la cible, et
> une seconde étape de régulation de température pour déterminer la quantité d'opération de sorte que la quantité de changement de la température de l'objet, pour chaque cycle de régulation, peut devenir nulle après avoir atteint la température de la cible par la température de l'objet.

3. Procédé selon l'une quelconque des revendications 1 à 2, **caractérisé en ce que** la plante homéotherme est du choux puant (symplocarpe fétide).

4. Procédé selon l'une quelconque des revendications 1 à 3, **caractérisé en ce que** l'objet est régulé à une température constante.

5. Procédé selon la revendication 4, **caractérisé en ce que** la régulation de température constante est effectuée avec une erreur de régulation de -0,5 degrés Celsius à +0,5 degrés Celsius.

6. Procédé selon l'une quelconque des revendications 1 à 5, **caractérisé en ce que** l'objet est régulé par une régulation de température qui monte ou une régulation de température qui baisse sans provoquer de sur-dépassement ou de sous-dépassement.

7. Dispositif de régulation de température comprenant :

> des moyens de chauffage (11) pour chauffer un objet prédéterminé (12), et
> des moyens de régulation de température (10) pour réguler une température de l'objet prédéterminé (12) par commande à rétroaction des moyens de chauffage (11) sur la base d'un algorithme de régulation de température basé sur le mécanisme de régulation d'une plante homéotherme,

**caractérisé en ce que** l'algorithme de régulation de température est représenté par l'équation ci-dessous :

$$\frac{d^2Q}{dt^2} = C_1\frac{dQ}{dt} + C_2 Q + C_3(T_A - T_s) \qquad (1)$$

dans laquelle :

Q : valeur calorifique de moyens de chauffage prédéterminés, $T_s$ : température des moyens de chauffage, $T_A$ : température extérieure, $C_1$-$C_3$ : coefficients de caractéristiques de température.

8. Dispositif de régulation de température selon la revendication 7, **caractérisé en ce que** la régulation de température inclut :

un premier processus de régulation de température pour fournir une quantité d'opération avec une valeur fixe jusqu'à ce qu'une température de l'objet (12) atteigne une température d'une cible, et
un second processus de régulation de température pour déterminer la quantité d'opération de sorte que la quantité du changement de la température de l'objet (12), pour chaque cycle de régulation, devient nulle après avoir atteint la température de la cible par la température de l'objet (12).

9. Dispositif de régulation de température selon l'une quelconque des revendications 7 à 8, **caractérisé en ce que** la plante homéotherme est du chou puant (symplocarpe fétide).

10. Dispositif de régulation de température selon l'une quelconque des revendications 7 à 9, **caractérisé en ce que** l'objet (12) est régulé à une température constante.

11. Dispositif de régulation de température selon la revendication 10, **caractérisé en ce que** la régulation de température constante est effectuée avec une erreur de régulation de -0,5 degrés Celsius à +0,5 degrés Celsius.

12. Dispositif de régulation de température selon l'une quelconque des revendications 7 à 11, **caractérisé en ce que** l'objet est régulé par une régulation de température qui augmente ou une régulation de température qui baisse sans provoquer de sur-dépassement ou sous-dépassement.

# FIG. 1

$T_{set}$ : Target value, $T$ : Controlled target value, $e$ : Deviation,
$K_P$ : Proportional coefficient, $K_I$ : Integral coefficient,
$K_D$ : Differential coefficient, $Q$ : Amount of operation

# FIG. 2

# FIG. 3

(a)

Before $T=T_{set}$

$$\boxed{T_{set} - T_0} - \boxed{C} \xrightarrow{Q_0} \boxed{\text{Heating unit}} \xrightarrow{\text{Output} : T}$$

(b)

After $T=T_{set}$

$$Q_n \xrightarrow{+} \bigoplus \xrightarrow{Q_{n+1}} \boxed{\text{Heating unit}} \xrightarrow{\text{Output} : T}$$
$$- \quad \boxed{C} \quad \boxed{\dfrac{dT}{dt}}$$

$T_{set}$ : Target value, $T$ : Controlled object value, $T_0$ : Controlled object initial value, $C$ : Control coefficient, $Q_n$ : Amount of operation

EP 1 852 765 B1

# FIG. 4

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001092501 A
- JP 2001163101 A

- JP 2000163101 A

### Non-patent literature cited in the description

- *Creation Matters,* 30 September 2004, 1-10, URL:ht-tp://www.creationresearch.org/creation matters/pdf/2004/C M09%2005%20low.PDF